# EUROPEAN PATENT SPECIFICATION

(11) **EP 2 796 616 B1**
(45) Date of publication and mention of the grant of the patent: **07.03.2018**
(21) Application number: 14397516.7
(22) Date of filing: 22.04.2014
(51) Int. Cl.: G03B 17/02, D21F 7/06, D21G 9/00, G01N 21/15, G03B 19/16, G01N 21/89

(54) **Pinhole camera and web monitoring beam comprising pinhole camera**
Lochkamera und Bahnüberwachungsträger mit Lochkamera
Appareil à sténopé et poutre de surveillance d'une bande avec appareil à sténopé

(30) Priority: 22.04.2013 FI 20135407
(43) Date of publication of application: 29.10.2014
(73) Proprietor: Procemex Oy, 40101 Jyväskylä (FI)
(72) Inventor: Lyyra, Jorma, 70150 Kuopio (FI)
(74) Representative: Berggren Oy, Tampere

(56) References cited:
- EP-A2- 1 600 762
- WO-A1-2010/116027
- KR-B1- 101 187 505
- US-B1- 6 362 889

## Description

### Field of the invention

The present invention relates to a device for cleaning and maintaining the cleanliness of lenses in cameras used for web monitoring and/or detecting defects in web-like products, for example in paper and cardboard machines, as well as a beam that comprises cameras, and a device for cleaning and maintaining the cleanliness of camera lenses.

### Background of the invention

In paper and cardboard machines, a web-like material running through the machine, such as paper or cardboard, is continuously formed. In paper machines, the web must be controlled in order to detect possible defects in the paper or cardboard web and to obtain a final product of high quality. Generally, cameras of web monitoring camera systems for detecting web breaks are installed inside various beams or beam structures extending above the web. Above the web, the cameras monitor the quality of the web, for example through openings or windows in the beams or beam structures. However, the quality of an image produced by a camera belonging to a web monitoring camera system placed in the beam structure may be affected by splashes blurring the observation windows or the camera lenses in the paper or cardboard machines. The soiling hampers the detecting of defects in the web. However, it has to be possible to secure the quality of the web to meet the clients' strict quality specifications.

These days, it is therefore necessary to manually wash the camera lenses or the lens protecting structures, such as transparent shields, in the beams and beam systems when they are soiled, so that the soiling would not decrease the quality of the image material produced by the cameras. Similarly, the cleaning of lens protection structures by blowing compressed air or compressed gas is possible in addition to or instead of washing. In blowing, the compressed air/gas is directed past the lens protection structures in such a way that the impurities are removed by the flow of compressed air/gas along the lens or the structures, enabling a higher quality of imaging.

EP1600762A2 discloses a pinhole camera in a protective casing. Gas air is supplied under pressure into the protective casing and out of the protective casing through an opening of a window, the opening forms an outlet for the gas. The optic of the camera is situated inside the casing near the penetration, leaving a narrow gap. The departing airflow is directed through or around this region. The airflow from the inlet is first passed through an annulus between camera and protective casing. The airflow is guided in contact with the camera. The air inlet is at the end of the cylindrical protective casing which lies opposite the opening.

WO2010116027A1 discloses beam structure to be used in web monitoring or defect detection and to be placed in the vicinity of a movable web in the transverse direction to support at least one camera used in the web monitoring. The beam structure comprises at least two carbon fibre composite beam modules with a monolithic profile. Longitudinal side of the beam comprises an installation opening for at least one camera.

KR101187505B1 discloses a pinhole camera in a housing, in which air blown from that end of the camera, which does not comprise the lens. In this solution the blown air cools the camera as it passes the camera body from the end of the camera head not comprising the lens toward the end of the camera comprising the lens and pinhole.

### Brief summary of the invention

It is an aim of the present invention to provide a solution to overcome the above-mentioned drawbacks of cameras in web monitoring systems and to present a novel cleaning system for web monitoring cameras in a web monitoring beam. The solution is presented by a pinhole camera comprising the features of claim 1 and a web monitoring beam comprising the features of claim 2. The invention is based on the idea that the web monitoring beam comprises one or more pinhole cameras, with a chamber area formed between the lenses and the walls forming the pinhole. Compressed air is blown into these chamber areas in such a way that impurities accumulated in front of the lens in the chamber area are blown with the compressed air through the pinhole out of the chamber area.

The invention relates to a pinhole camera comprising the features of claim 1. The invention also relates to a web monitoring beam comprising the features of claim 2.

### Description of the drawings

In the following, the present invention will be described in more detail with reference to the appended drawings, in which
Fig. 1 shows a cleaning system according to an advantageous embodiment of the invention in connection with one camera in a web monitoring beam, and
Fig. 2 shows a web monitoring beam according to an embodiment of the invention, comprising a camera cleaning system according to the invention.

### Detailed description of the invention

Due to competition, paper and cardboard machines have to be operated with increasing running speeds and minimized downtimes, and have to produce a high-quality product meeting strict quality specifications. Improving productivity is an aim in production as well as in maintenance, and achieving this aim is enhanced by various cleaning systems for web monitoring systems and cameras. For example, a compressed-air nozzle may be integrated in a web monitoring beam, for blowing compressed air into the beam at the first end of the beam, the air being guided out at the second end of the beam. The aim is to guide dust or other impurities entered in the beam by means of compressed air out of the beam, via the end of the beam. In this method, the whole beam is filled with compressed air. However, the length of the beam may be so great that the required air pressure becomes relatively high, in order to secure a sufficient pressure for removing dust and/or impurities from the inside of the beam.

In the system for cleaning or maintaining the cleanliness according to the invention, integrated in cameras in the web monitoring beam and in the camera system for detecting web breaks in the web monitoring beam, a so-called chamber area is provided in connection with each lens of the camera, to which compressed air is guided by means of a compressed-air nozzle. The chamber area may be provided around the lens by means of a flange. Because the cameras in the web monitoring beam according to the invention and the cameras according to the invention are pinhole cameras, the pinhole of the camera is used as an outlet for compressed air. Consequently, in the solution according to the invention, an area is formed by a flange between the camera lens and the wall comprising the pinhole of the camera, into which area compressed air is blown and from which area the compressed air exits via the pinhole of the camera, entraining any dust, splashes, chemicals, water, or other material possibly entered in the chamber area, through the pinhole of the camera. With the structure according to the invention, there is no need to supply a large volume (e.g. the whole beam) with compressed air, but compressed air can be supplied into each chamber area of the camera from a compressed-air tank by means of a hose or the like. The volume of the chamber area is considerably smaller than that of the beam, so that the quantity of compressed air needed for cleaning will remain significantly smaller with chamber structures according to the invention, integrated in cameras, than when the whole beam is supplied with compressed air.

The term "web monitoring beam" refers to any beam or beam structure that can be used for web monitoring; in other words, the beam can be placed in the vicinity of the web in a transverse direction with respect to the web, to support at least one functional device used for web monitoring, for example a camera. With respect to its length, shape or material, the beam is not limited in any way but it can be *e.g.* a beam structure made of carbon fibre material and consisting of several modules, or it can be a solid beam made of carbon fibre or metal. Moreover, the placement of the web monitoring beam in a paper or cardboard machine, or in another machine suitable for use of the invention, is not limited. However, it is possible that the greatest benefit of the cleaning system according to the invention, integrated in cameras, is obtained by placing the cameras in a location having a high degree and/or rate of contamination of the cameras, for example in the vicinity of the headbox of the paper or cardboard machine, on top of the top wire or underneath the paper or cardboard web.

Consequently, the invention is not limited solely to the web monitoring beam comprising cameras according to the invention, but the invention also relates to single cameras according to the invention which can be placed in a web monitoring beam.

Thus, the cameras according to the invention that are placed in a web monitoring beam according to the invention, are pinhole cameras. The pinhole cameras are not limited with respect to their type or model, or the size of the pinhole, but they can be selected according to the object and the location to be monitored and the need for monitoring, and they can be any pinhole cameras in which a chamber area can be provided around the lens and supplied with compressed air conveyed via a compressed-air nozzle by a hose from a compressed-air tank. In this context, the term "hose" refers to any tube or the like for conveying/transferring compressed air from a compressed-air tank, to be blown into the chamber areas of the pinhole cameras. The number of cameras used in the beam is not limited, but one or more cameras can be provided, and compressed air can be supplied to the chamber areas of all the cameras in the beam. The compressed air is supplied from the compressed-air tank by means of hoses extending inside the beam to the vicinity of the cameras inside the beam, and blown to the chamber area by a compressed-air nozzle. The number of the cameras and thereby also the number of chamber areas and compressed air nozzles may depend on *e.g*. the length of the beam and on the web to be monitored.

The compressed air used for cleaning can be compressed air or another gas mixture suitable for the purpose. The pressure of the compressed air can be selected according to the use; in other words, the pressure can be higher in an application which comprises several cameras or where the material to be cleaned is heavier than dust, for example splashes. The pressure applied can vary between, for example, 2 and 6 bar.

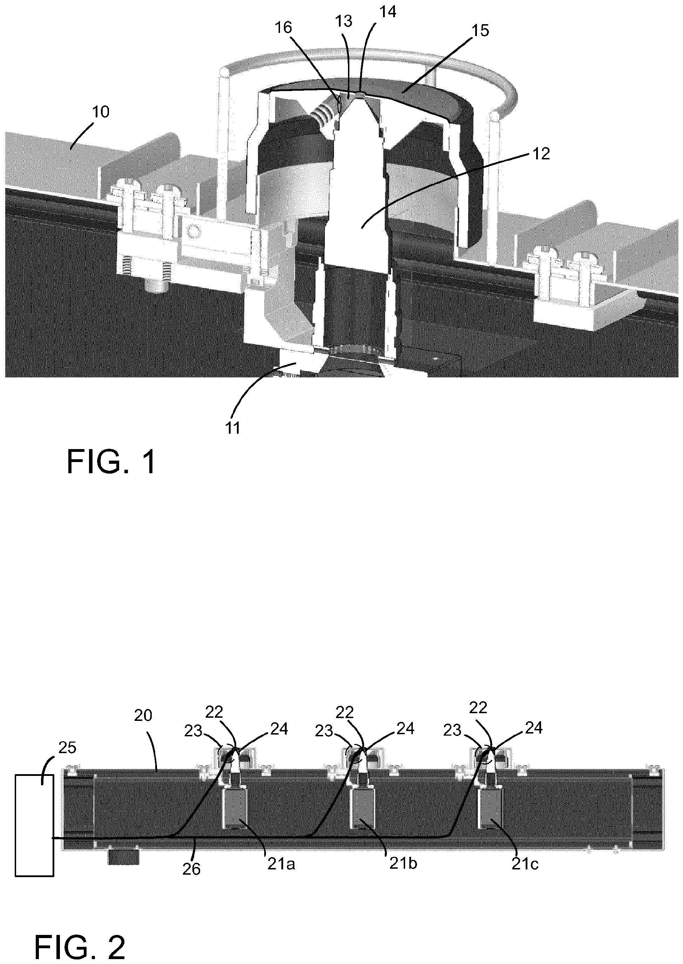

Figure 1 shows a cross-sectional view of a cleaning system according to an embodiment of the invention in connection with one camera of a web monitoring beam 10. In the cleaning system, a chamber area 13 is provided around the lens 12 of a pinhole camera 11 by a flange, for example a flange made of metal, plastic, Teflon, or a composite. The chamber area 13 is limited by the flange between the lens 12 and the wall comprising the pinhole 14 of the pinhole camera 11, *i.e.* the lid 15, so that the lower edge of the flange is limited to the lens 12 and the upper edge to the wall 15 on top of the camera lens 12. The flange is arranged tightly between the lens 12 and the wall 15 so that compressed air cannot enter the beam 10 from the joint between the flange and the lens 12 nor from the joint between the flange and the wall 15. The flange limiting the chamber area 13 is equipped with an orifice 16 for a compressed-air nozzle. Compressed air is introduced/blown via the nozzle to the chamber area 13, from which the compressed air exits via the pinhole 14, entraining any impurities accumulated in front or in the vicinity of the lens 12 of the pinhole camera 11, as well as elsewhere in the chamber area, via the pinhole 14. To put it simply, the compressed air is blown by the nozzle via the orifice 16 in the chamber area 13 to the chamber area 13 and further via the pinhole 14 out of the pinhole camera 11 and the beam 10. The compressed-air nozzle is fastened to the orifice 16 in such a way that all air blown from the compressed-air nozzle enters the chamber area 13 and not, for example, inside the beam 10.

Figure 2 shows a web monitoring beam 20 with pinhole cameras 21a-21c, comprising a cleaning system for the cameras according to an embodiment of the invention. In the cleaning system, the pinhole cameras 21a-21c inside the web monitoring beam 20 are equipped with chamber areas 22, into which compressed air is blown by compressed-air nozzles 23, discharged from the chamber areas 22 via pinholes 24 of the pinhole cameras 21a-21c. The compressed air is supplied from a compressed-air tank 25 by a hose 26 to be blown to the chamber areas 22 inside the beam 20. The hose 26 is connected to the compressed air tank 25. The hose 26 connected to the compressed-air tank 26 is branched so that compressed air can be blown to the chamber areas 22 of the cameras 21a-21c by means of the compressed-air nozzle 23 via an orifice (not shown) in the chamber area 22. However, it is possible to supply compressed air by separate hoses from the compressed-air tank 25 to the chamber areas 22 of each camera 21a-21c.

The present invention is not limited solely to the above-presented examples, but it can be modified within the scope of the appended claims.

## Claims

1. A pinhole camera (11) comprising a system for cleaning the lens (12) of the pinhole camera (11), wherein said system comprises means for generating compressed air, wherein said means for generating compressed air comprise a compressed-air tank (25), a hose (26), and a compressed-air nozzle (23), wherein said system for cleaning the lens (12) of the pinhole camera (11) is integrated in the camera so that said pinhole camera (11) comprises a chamber area (13) formed between the lens (12) of the pinhole camera (11) and a wall (15) comprising the pinhole (14) of the pinhole camera (11) by means of a flange, wherein the lower edge of the flange is limited to the lens (12) and the upper edge to the wall (15) on top of the camera lens (12) and wherein the flange is equipped with an orifice (16) for the compressed-air nozzle (23) for blowing compressed air into the chamber area (13), wherein the compressed-air nozzle (23) is connected to the orifice in the chamber area (13) and configured to blow compressed air from the compressed-air tank (25) via the hose (26) to the chamber area (13), and the compressed-air nozzle (23) is fastened to the orifice (16) so that all air blown from the compressed-air nozzle enters directly the chamber area (13) and exits the chamber area (13) via the pinhole (14) of the pinhole camera (11).

2. A web monitoring beam (20) comprising a compressed-air tank (25), at least one hose (26), and more than one pinhole camera (21a, 21b, 21c), wherein each pinhole camera (21a, 21b, 21c) comprises a chamber area (13) formed between the lens (12) of the pinhole camera (21a, 21b, 21c) and a wall (15) comprising the pinhole (14) of the pinhole camera (21a, 21b, 21c) by means of a flange, wherein the lower edge of the flange is limited to the lens (12) and the upper edge to the wall (15) on top of the camera lens (12) and wherein the flange is equipped with an orifice (16) for a compressed-air nozzle (23) for blowing compressed air into the chamber area (13), and wherein compressed air is supplied for the cameras (21a, 21b, 21c) from the compressed-air tank (25) by the at least one hose (26) extending inside the beam (20), wherein the compressed-air nozzle (23) is connected to the orifice in the chamber area (13) and configured to blow compressed air from the compressed-air tank (25) via the hose (26) to the chamber area (13), and the compressed-air nozzle (23) is fastened to the orifice (16) so that all air blown from the compressed-air nozzle enters directly the chamber area (13) and exits the chamber area (13) via the pinhole (14) of the pinhole camera (21a, 21b, 21c), and wherein each pinhole camera (21a, 21b, 21c) is placed inside the web monitoring beam (20).

## Patentansprüche

1. Eine Lochkamera (11), die ein System zum Reinigen der Linsen (12) der Lochkamera (11) aufweist, wobei das System Mittel zum Erzeugen von Druckluft aufweist, wobei die Mittel zum Erzeugen von Druckluft einen Druckluftbehälter (25), einen Schlauch (26) und eine Druckluftdüse (23) aufweisen, wobei das System zum Reinigen der Linse (12) der Lochkamera (11) in der Kamera so integriert ist, dass die Lochkamera (11) einen Kammerbereich (13) umfasst, der zwischen der Linse (12) der Lochkamera (11) und einer Wand (15), die das Loch (14) der Lochkamera (11) mittels eines Flansches aufweist, gebildet ist, wobei der untere Rand des Flansches an der Linse (12) und der obere Rand an der Wand (15) oben an der Kameralinse (12) angrenzt, und wobei der Flansch mit einer Öffnung (16) für die Druckluftdüse (23) zum Einblasen von Druckluft in den Kammerbereich (13) versehen ist, wobei die Druckluftdüse (23) mit der Öffnung in dem Kammerbereich (13) versehen und konfiguriert ist, um Druckluft aus dem Druckluftbehälter (25) über den Schlauch (26) zum Kammerbereich (13) zu blasen, und
die Druckluftdüse (23) an der Öffnung (16) so verbunden ist, dass sämtliche von der Druckluftdüse geblasene Luft direkt in den Kammerbereich (13) eintritt und aus dem Kammerbereich (13) über das Loch (14) der Lochkamera (11) austritt.

2. Ein Bahnüberwachungsträger (20), der einen Druckluftbehälter (25), mindestens einen Schlauch (26) und mehr als eine Lochkamera (21a, 21b, 21c) aufweist, wobei jede Lochkamera (21a, 21b, 21c) einen Kammerbereich (13) aufweist, der zwischen der Linse (12) der Lochkamera (21a, 21b, 21c) und einer Wand (15) gebildet ist, die das Loch (14) der Lochkamera (21a, 21b, 21c) mittels eines Flansches aufweist, wobei der untere Rand des Flansches an der Linse (12) und der obere Rand an der Wand (15) oben an der Kameralinse (12) angrenzt, und wobei der Flansch mit einer Öffnung (16) für eine Druckluftdüse (23) zum Einblasen von Druckluft in den Kammerbereich (13) versehen ist, und wobei Druckluft für die Kameras (21a, 21b, 21c) aus dem Druckluftbehälter (25) durch den mindestens einen im Träger (20) verlaufenden Schlauch (26) geleitet wird, wobei die Druckluftdüse (23) mit der Öffnung in dem Kammerbereich (13) verbunden und konfiguriert ist, um Druckluft aus dem Druckluftbehälter (25) über den Schlauch (26) zum Kammerbereich (13) zu blasen, und
die Druckluftdüse (23) so mit der Öffnung (16) verbunden ist, dass sämtliche aus der Druckluftdüse geblasene Luft direkt in den Kammerbereich (13) eintritt und aus dem Kammerbereich (13) über das Loch (14) der Lochkamera (21a, 21b, 21c) austritt, und wobei jede Lochkamera (21a, 21b, 21c) in dem Bahnüberwachungsträger (20) platziert ist.

## Revendications

1. Appareil photo à sténopé (11) comprenant un système destiné à nettoyer l'objectif (12) de l'appareil photo à sténopé (11), dans lequel ledit système comprend des moyens destinés à générer de l'air comprimé, dans lequel lesdits moyens destinés à générer de l'air comprimé comprennent un réservoir d'air comprimé (25), un tuyau flexible (26), et une buse à air comprimé (23), dans lequel ledit système destiné à nettoyer l'objectif (12) de l'appareil photo à sténopé (11) est intégré dans l'appareil photo de sorte que ledit appareil photo à sténopé (11) comprend une zone de chambre (13) formée entre l'objectif (12) de l'appareil photo à sténopé (11) et une paroi (15) comprenant le sténopé (14) de l'appareil photo à sténopé (11) au moyen d'une bride, dans lequel le bord inférieur de la bride est limité à l'objectif (12) et le bord supérieur à la paroi (15) en haut de l'objectif d'appareil photo (12) et dans lequel la bride est équipée d'un orifice (16) pour la buse à air comprimé (23) destinée à insuffler de l'air comprimé dans la zone de chambre (13), dans lequel la buse à air comprimé (23) est raccordée à l'orifice dans la zone de chambre (13) et configurée pour insuffler de l'air comprimé du réservoir d'air comprimé (25) via le tuyau flexible (26) à la zone de chambre (13), et la buse à air comprimé (23) est fixée à l'orifice (16) de sorte que tout l'air insufflé à partir de la buse à air comprimé entre directement dans la zone de chambre (13) et sort de la zone de chambre (13) via le sténopé (14) de l'appareil photo à sténopé (11).

2. Poutre de surveillance de bande (20) comprenant un réservoir d'air comprimé (25), au moins un tuyau flexible (26) et plus d'un appareil photo à sténopé (21a, 21b, 21c), dans laquelle chaque appareil photo à sténopé (21a, 21b, 21c) comprend une zone de chambre (13) formée entre l'objectif (12) de l'appareil photo à sténopé (21a, 21b, 21c) et une paroi (15) comprenant le sténopé (14) de l'appareil photo à sténopé (21a, 21b, 21c) au moyen d'une bride, dans laquelle le bord inférieur de la bride est limité à l'objectif (12) et le bord supérieur à la paroi (15) en haut de l'objectif d'appareil photo (12) et dans laquelle la bride est équipée d'un orifice (16) pour une buse à air comprimé (23) destinée à insuffler de l'air comprimé dans la zone de chambre (13), et dans laquelle de l'air comprimé est fourni pour les appareils photo (21a, 21b, 21c) en provenance du réservoir d'air comprimé (25) par l'au moins un tuyau flexible (26) s'étendant à l'intérieur de la poutre (20), dans laquelle la buse à air comprimé (23) est raccordée à l'orifice dans la zone de chambre (13) et configurée pour insuffler de l'air comprimé du réservoir d'air comprimé (25) via le tuyau flexible (26) à la zone de chambre (13), et la buse à air comprimé (23) est fixée à l'orifice (16) de sorte que tout l'air insufflé à partir de la buse à air comprimé entre directement dans la zone de chambre (13) et sort de la zone de chambre (13) via le sténopé (14) de l'appareil photo à sténopé (21a, 21b, 21c), et dans laquelle chaque appareil photo à sténopé (21a, 21b, 21c) est placé à l'intérieur de la poutre de surveillance de bande (20).
